# EUROPEAN PATENT APPLICATION

(11) **EP 4 502 198 A1**
(43) Date of publication of application: **05.02.2025**
(21) Application number: 23780776.3
(22) Date of filing: 29.03.2023
(51) Int. Cl.: C22B 11/00, C02F 1/28, C08C 19/02, C08F 6/08, C22B 3/24

(54) **METHOD FOR RECOVERING PLATINUM GROUP ELEMENT**

(30) Priority: 30.03.2022 JP 2022057219
(71) Applicant: Zeon Corporation, Tokyo 100-8246 (JP)
(72) Inventor: INOUE, Sayaka, Tokyo 100-8246 (JP); WATANABE, Yasuaki, Tokyo 100-8246 (JP)
(74) Representative: Maiwald GmbH
(86) International application number: PCT/JP2023/012994
(87) International publication number: WO 2023/190768

(57) **Abstract**

Provided is a method for recovering a platinum group element from a solution containing a platinum group element using a capturing agent by adsorbing a platinum group element onto a capturing agent, the method including recovering a platinum group element by adsorbing a platinum group element onto a capturing agent so that a ratio of a platinum group element adsorbed in a form of a platinum group element complex in an oxidized state is 50 mol% or more among platinum group elements adsorbed onto the capturing agent.

## Description

### TECHNICAL FIELD

The present invention relates to a method for recovering a platinum group element from a solution containing a platinum group element.

### BACKGROUND ART

In the past, nitrile rubber (acrylonitrile-butadiene copolymer rubber) has been used as a material for automobile rubber parts, such as hoses and tubes, by making use of its oil resistance, mechanical properties, chemical resistance, and the like. Further, hydrogenated nitrile rubber (hydrogenated acrylonitrile-butadiene copolymer rubber) obtained by hydrogenating the carbon-carbon double bond in the polymer main chain of the nitrile rubber also has excellent heat resistance, and hence is used for rubber parts such as belts, hoses, and diaphragms.

Such a hydrogenated nitrile rubber is produced, for example, by the following production process. That is, a monomer mixture containing an α,β-ethylenically unsaturated nitrile monomer and a conjugated diene monomer is subjected to an emulsion polymerization, a latex of the nitrile rubber obtained by the emulsion polymerization is coagulated and dried, and then the nitrile rubber obtained by the coagulation and drying is dissolved in a water-soluble organic solvent to obtain a water-soluble organic solvent solution of the nitrile rubber. Then, a platinum group element-containing catalyst as a hydrogenation catalyst is added to the water-soluble organic solvent solution of the nitrile rubber, and hydrogenation is carried out.

On the other hand, the production of the hydrogenated nitrile rubber by such a production method uses a platinum group element-containing catalyst as a hydrogenation catalyst, and, in view of suppressing coloring of the finally-obtained hydrogenated nitrile rubber, removal of the platinum group element-containing catalyst has been considered in order to reduce the content of the platinum group element-containing catalyst in the hydrogenated nitrile rubber.

As such a technique for recovering a platinum group element-containing catalyst, for example, Patent Document 1 discloses a method in which a complexing agent is added to a reaction mixture of a hydrogenation reaction that is performed in the presence of a platinum group element-containing catalyst supported on a carrier so as to complex the platinum group element-containing catalyst that has been separated from the carrier in the reaction mixture, and then the obtained complex is re-supported on a carrier, and the carrier is removed from the reaction mixture.

### RELATED ART DOCUMENTS

### PATENT DOCUMENTS

Patent Document 1: JP 2004-26998 A

### SUMMARY OF THE INVENTION

### PROBLEM TO BE SOLVED BY THE INVENTION

On the other hand, since platinum group elements contained in platinum group element-containing catalysts are expensive, in recent years, their recovery and reuse have been in demand. As a result of research by the present inventors in light of such a demand, they have found that, although the technique described in Patent Document 1 allows for removal of platinum group element-containing catalyst at a relatively high removal rate from a solution of platinum group element-containing catalyst and the like, the recovery amount as a platinum group element is small. Therefore, there has been a need for improvement in view of recovery and reuse of platinum group elements.

The present invention has been made in view of such circumstances, and an object of the present invention is to provide a platinum group element recovery method that makes it possible to recover platinum group elements with high efficiency.

### MEANS FOR SOLVING THE PROBLEMS

The present inventors conducted intensive research to achieve the above object, and, as a result, they found that the above-mentioned problems can be solved by a method in which when a platinum group element is recovered from a solution containing a platinum group element using a capturing agent by adsorbing the platinum group element onto the capturing agent, the platinum group element is recovered by being adsorbed onto the capturing agent so that the ratio of a platinum group element in the form of a platinum group element complex in an oxidized state among the platinum group elements adsorbed onto the capturing agent is equal to or greater than a predetermined ratio. With this finding, the present inventors completed the present invention.

Specifically, the present invention provides a method for recovering a platinum group element from a solution containing a platinum group element using a capturing agent by adsorbing a platinum group element onto a capturing agent. The method comprises recovering a platinum group element by adsorbing a platinum group element onto a capturing agent so that a ratio of a platinum group element adsorbed in a form of a platinum group element complex in an oxidized state is 50 mol% or more among platinum group elements adsorbed onto the capturing agent.

In the method for recovering a platinum group element according to the present invention, it is preferable that a platinum group element be recovered by adsorbing a platinum group element onto a capturing agent so that a ratio of the platinum group element adsorbed in a form of a platinum group element complex in a divalent or higher-valent oxidized state is 50 mol% or more among platinum group elements adsorbed onto the capturing agent.

In the method for recovering a platinum group element according to the present invention, it is preferable that a platinum group element be recovered in the presence of a complexing agent represented by the following General Formula (1),

CₙHₘNₚO_{q}Xᵣ (1)

where X is an element other than C, H, N, and O, n = 1 to 13, m = 1 to 18, p = 0 to 4, q = 0 to 4, r = 0 to 4, and at least one of p and q is 1 or more.

In the method for recovering a platinum group element according to the present invention, it is preferable that the complexing agent be an ammonium salt, an amine, or an imine.

In the method for recovering a platinum group element according to the present invention, it is preferable that the solution containing a platinum group element be a solution containing a platinum group element and a polymer.

In the method for recovering a platinum group element according to the present invention, it is preferable that the solution containing a platinum group element be a solution containing a hydrogenated nitrile rubber and a platinum group element derived from a platinum group element-containing catalyst.

In the method for recovering a platinum group element according to the present invention, it is preferable that the recovering a platinum group element contained in a solution containing a platinum group element by adsorbing a platinum group element onto a capturing agent be initiated in a state in which the solution containing a platinum group element is simultaneously in contact with a metal-free oxidizing agent, a complexing agent, and a capturing agent.

In the method for recovering a platinum group element according to the present invention, it is preferable that the solution containing a platinum group element be brought simultaneously into contact with a metal-free oxidizing agent and a complexing agent, and a solution containing 50 mol% or more of the platinum group element being in a form of a platinum group element complex in an oxidized state be passed through a column filled with a capturing agent, thereby adsorbing a platinum group element onto the capturing agent.

In the method for recovering a platinum group element according to the present invention, it is preferable that the metal-free oxidizing agent be hydrogen peroxide, air, or oxygen.

In the method for recovering a platinum group element according to the present invention, it is preferable that the capturing agent be a surface-treated silica.

### EFFECTS OF THE INVENTION

The present invention provides a platinum group element recovery method that makes it possible to recover platinum group elements with high efficiency.

### DESCRIPTION OF EMBODIMENTS

The method for recovering a platinum group element according to the present invention is a method for recovering a platinum group element from a solution containing a platinum group element using a capturing agent by adsorbing a platinum group element onto a capturing agent. The method comprises recovering a platinum group element by adsorbing a platinum group element onto a capturing agent in a state in which 50 mol% or more of the platinum group element adsorbed onto the capturing agent is in a form of a platinum group element complex in an oxidized state.

### <Platinum Group Element>

First, the platinum group element to be recovered by the recovery method according to the present invention is described below.

In the recovery method according to the present invention, the platinum group element to be recovered may be any platinum group element contained in a solution containing a platinum group element. Examples of such a platinum group element include platinum group elements contained in a solution containing a platinum group element and a polymer. More specifically, examples include platinum group elements derived from platinum group element-containing catalysts, which are used to obtain a hydrogenated conjugated diene rubber, such as a hydrogenated nitrile rubber, by hydrogenating carbon-carbon double bonds contained in a conjugated diene rubber, such as nitrile rubber. That is, examples include platinum group elements derived from platinum group element-containing catalysts included in solutions of hydrogenated conjugated diene rubbers, such as hydrogenated nitrile rubber. As an example of the hydrogenation reaction of such a conjugated diene rubber, a hydrogenation reaction of nitrile rubber is described below.

Examples of the nitrile rubber include copolymers obtained by copolymerizing a monomer mixture containing at least an α,β-ethylenically unsaturated nitrile monomer and a conjugated diene monomer. The α,β-ethylenically unsaturated nitrile monomer is not particularly limited as long as it is an α,β-ethylenically unsaturated compound having a nitrile group. Examples thereof include acrylonitrile; α-halogenoacrylonitriles such as α-chloroacrylonitrile and α-bromoacrylonitrile; α-alkylacrylonitriles such as methacrylonitrile; and the like. In addition, examples of the conjugated diene monomer include 1,3-butadiene, isoprene, 2,3-dimethyl-1,3-butadiene, 1,3-pentadiene, and chloroprene, which are conjugated diene monomers with 4 to 6 carbon atoms.

The content of the α,β-ethylenically unsaturated nitrile monomer unit in the nitrile rubber is preferably 5 to 60% by weight, more preferably 10 to 50% by weight, further preferably 15 to 50% by weight with respect to all the monomer units. Further, the content of the conjugated diene monomer unit (including the moiety hydrogenated in the hydrogenation reaction) in the nitrile rubber is preferably 40 to 95% by weight, more preferably 50 to 90% by weight, further preferably 50 to 85% by weight with respect to all the monomer units.

Further, the nitrile rubber may be a copolymer obtained by copolymerizing, in addition to the α,β-ethylenically unsaturated nitrile monomer and the conjugated diene monomer, another monomer copolymerizable therewith. Examples of such other copolymerizable monomers include α,β-ethylenically unsaturated monocarboxylic acid monomer, such as acrylic acid and methacrylic acid; α,β-ethylenically unsaturated polycarboxylic acid monomer; α,β-ethylenically unsaturated monocarboxylic acid ester monomer, such as methyl acrylate, ethyl acrylate, and n-butyl acrylate; α,β-ethylenically unsaturated dicarboxylic acid monoester monomer, such as mono-n-butyl maleate and mono-n-butyl fumarate; ethylene; α-olefin monomers; aromatic vinyl monomer; fluorine-containing vinyl monomer; copolymerizable antioxidant; and the like.

The hydrogenation reaction of the nitrile rubber is usually carried out using a platinum group element-containing catalyst. The hydrogenation reaction of the nitrile rubber may be performed on a nitrile rubber latex obtained by emulsion polymerization in the latex state as it is. It is also possible to obtain a solid-state nitrile rubber by coagulating and drying the nitrile rubber latex obtained by emulsion polymerization, dissolve the obtained nitrile rubber in an organic solvent, and carry out the hydrogenation reaction in a polymer solution state. Of these, the method of dissolving the obtained nitrile rubber in a water-soluble organic solvent and carrying out the hydrogenation reaction in a polymer solution state is preferable in view of catalytic activity and the like.

The coagulation and drying of the nitrile rubber latex may be performed according to a known method, but it is preferable to provide a treatment step for modification in which a crumb obtained by coagulation is brought into contact with a basic aqueous solution so that the pH of a polymer solution obtained by dissolving the nitrile rubber to be obtained in tetrahydrofuran (THF) exceeds 7. The pH of the polymer solution as measured after dissolving in THF and adding several wt% of water with respect to THF is preferably in the range of 7.2 to 12, more preferably 7.5 to 11.5, most preferably 8 to 11. Performing such a treatment of bringing the crumb into contact with a basic aqueous solution enables the hydrogenation in the solution system (hydrogenation by way of dissolving in an organic solvent) to proceed more rapidly.

The concentration of the nitrile rubber in the polymer solution during the hydrogenation reaction is preferably 1 to 70% by weight, more preferably 1 to 40% by weight, particularly preferably 2 to 20% by weight. Examples of the organic solvent include ketones such as acetone, methyl ethyl ketone, diethyl ketone, and methyl isopropyl ketone; ethers such as tetrahydrofuran, and dioxane; esters such as ethyl acetate; aldehydes such as dimethylformamide; aromatic compounds such as toluene, chlorobenzene, and monochlorobenzene; halogenated aliphatic compounds; and the like. Among these organic solvents, ketones are preferably used, while acetone is particularly preferably used.

When the hydrogenation reaction is performed, a platinum group element-containing catalyst is used as the hydrogenation catalyst. The platinum group element-containing catalyst may be any catalyst containing a platinum group element, that is, ruthenium, rhodium, palladium, osmium, iridium or platinum, and although not particularly limited, from the viewpoint of catalytic activity and availability, a palladium compound and a rhodium compound are preferable, and a palladium compound is more preferable. Also, two or more platinum group element compounds may be used in combination, but in this case, likewise, it is preferable that a palladium compound be used as the main catalyst component.

The palladium compound to be used is generally a palladium(II) compound or a palladium(IV) compound. The form of such a compound is a salt or a complex salt.

Examples of the palladium compound include palladium acetate, palladium cyanide, palladium fluoride, palladium chloride, palladium bromide, palladium iodide, palladium nitrate, palladium sulfate, palladium oxide, palladium hydroxide, dichloro(cyclooctadiene) palladium, dichloro(norbornadiene) palladium, dichlorobis(triphenylphosphine) palladium, sodium tetrachloropalladate, ammonium hexachloropalladate, potassium tetracyanopalladate, and the like.

Among these palladium compounds, palladium acetate, palladium nitrate, palladium sulfate, palladium chloride, sodium tetrachloropalladate, and ammonium hexachloropalladate are preferable, and palladium acetate, palladium nitrate, and palladium chloride are more preferable.

Examples of the rhodium compound include rhodium chloride, rhodium bromide, rhodium iodide, rhodium nitrate, rhodium sulfate, rhodium acetate, rhodium formate, rhodium propionate, rhodium butyrate, rhodium valerate, rhodium naphthenate, rhodium acetylacetonate, rhodium oxide, rhodium trihydroxide, and the like.

As the platinum group element-containing catalyst, the above-mentioned palladium compound or rhodium compound may be used in its original form, or the catalyst component of the above-mentioned palladium compound or rhodium compound may be supported on a carrier to be used as a supported catalyst.

As the carrier for forming a supported catalyst, any carrier for a metal catalyst may be used in general, but specifically, inorganic compounds containing carbon, silicon, aluminum, magnesium, or the like are preferable. Among these as well, from the viewpoint of the fact that the adsorption efficiency of the catalyst components such as a palladium compound and a rhodium compound increases, it is preferable to use a carrier having an average particle diameter of 1 µm to 500 µm and a specific surface area of 200 to 2,000 m²/g.

Such a carrier is appropriately selected from known catalyst carriers such as activated carbon, activated clay, talc, clay, alumina gel, silica, diatomaceous earth, and synthetic zeolite. Examples of the method for supporting the catalyst component on the carrier include an impregnation method, a coating method, a spraying method, and a sedimentation method, and the like. The load amount of the catalyst component is generally 0.5 to 80% by weight, preferably 1 to 50% by weight, more preferably 2 to 30% by weight in terms of the ratio of the catalyst component with respect to the total amount of the catalyst and the carrier. The carrier supporting the catalyst component may be formed in the shape of a sphere, a column, a polygonal column, or a honeycomb depending on the type of reactor or the form of reaction.

Further, in the case of using the salt of a platinum group element such as a palladium compound or a rhodium compound as a platinum group element-containing catalyst in its original state without supporting it on a carrier, it is preferable to use a stabilizer to stabilize these compounds. By making the stabilizer present in a medium in which a platinum group element-containing catalyst, such as a palladium compound or a rhodium compound, is dissolved or dispersed, the nitrile rubber can be hydrogenated with a high hydrogen content. Also, a complexed platinum group element-containing catalyst may be used.

Examples of such a stabilizer include polymers of vinyl compound having a polar group in a side chain, such as polyvinylpyrrolidone, polyvinyl alcohol, polyvinyl acetal, and polyalkylvinylether; metal salts of polyacrylic acid, such as sodium polyacrylate and potassium polyacrylate; polyethers such as polyethylene oxide, polypropylene oxide, and ethylene oxide-propylene oxide copolymer; cellulose derivatives such as carboxymethyl cellulose and hydroxypropyl cellulose; natural polymers such as gelatin and albumin; and the like. Among these, polymers of vinyl compound having a polar group in a side chain or polyethers are preferable. Among the polymers of vinyl compound having a polar group in a side chain, polyvinylpyrrolidone and polyalkylvinylether are preferable, and polymethylvinylether is more preferable. Examples of ligands for complexation include triphenylphosphine.

Further, when a hydrogenation reaction is performed, a reducing agent may be used in combination. Examples of the reducing agent include hydrazines such as hydrazine, hydrazine hydrate, hydrazine acetate, hydrazine sulfate, and hydrazine hydrochloride; a compound that releases hydrazine; and the like.

The temperature for performing a hydrogenation reaction is generally 0 to 200°C, preferably 5 to 150°C, more preferably 10 to 100°C. By controlling the temperature for a hydrogenation reaction in this range, any side reaction can be suppressed and the reaction rate can be made sufficient.

A hydrogen pressure when performing a hydrogenation reaction is generally 0.1 to 20 MPa, preferably 0.1 to 15 MPa, more preferably 0.1 to 10 MPa. Though the reaction time is not particularly limited, it is generally 30 minutes to 50 hours. Also, as for hydrogen gas, it is preferable to replace the reaction system with an inert gas such as nitrogen and then with hydrogen, followed by applying more pressure.

Further, when a supported catalyst is used as the platinum group element-containing catalyst, the water-soluble organic solvent solution of the hydrogenated nitrile rubber can be obtained by separating the supported catalyst through filtration, centrifugal separation, and the like.

### <Method for Recovering Platinum Group Element>

In the following, a method for recovering a platinum group element according to the present invention is described.

A method for recovering a platinum group element according to the present invention is a method for recovering a platinum group element using a capturing agent from a solution containing a platinum group element by adsorbing a platinum group element onto the capturing agent.

Examples of the solution containing a platinum group element include a solution of a hydrogenated conjugated diene rubber such as the hydrogenated nitrile rubber mentioned above. When the solution containing a platinum group element is a solution of a hydrogenated conjugated diene rubber such as the hydrogenated nitrile rubber mentioned above, examples thereof include a solution containing a platinum group element derived from a platinum group element-containing catalyst and the like. In the case where a solution containing a platinum group element is the solution of a hydrogenated conjugated diene rubber such as the hydrogenated nitrile rubber mentioned above, and a supported catalyst is used as a platinum group element-containing catalyst, the supported catalyst may be separated by filtration or centrifugal separation, and the obtained solution may be subjected to the method for recovering a platinum group element according to the present invention. It is also possible that the supported catalyst remains without being separated may be subjected to the method for recovering a platinum group element according to the present invention.

In the method for recovering a platinum group element according to the present invention, a capturing agent is used and a platinum group element is adsorbed onto the capturing agent by bringing a solution containing a platinum group element into contact with the capturing agent, thereby recovering the platinum group element. At this process, the recovery of the platinum group element by adsorbing it onto the capturing agent is performed in a state in which 50 mol% or more of the platinum group element adsorbed onto the capturing agent is in the form of a platinum group element complex in an oxidized state. More specifically, the method is performed in a state in which, among platinum group elements adsorbed onto the capturing agent, the ratio of a platinum group element in the form of a platinum group element complex in an oxidized state is 50 mol% or more, and, by separating the capturing agent onto which the platinum group element is adsorbed in such a state from the solution containing a platinum group element, the platinum group element is recovered. According to the present invention, it is possible to recover a platinum group element with high efficiency by adopting such a technique. In other words, it is possible to increase the amount of platinum group elements captured onto the capturing agent (thus increasing the capture rate), thereby increasing the recycling rate.

In the recovery method according to the present invention, a capturing agent is used and a platinum group element contained in a solution containing a platinum group element is adsorbed onto the capturing agent. It should be noted that the present inventors have conducted intensive study by focusing on the state of the platinum group element adsorbed onto the capturing agent. Specifically, the present inventors have conducted intensive study by focusing on the state of the platinum group element adsorbed onto the capturing agent, and, as a result, they found that the state of the platinum group element adsorbed onto the capturing agent, particularly the oxidized state thereof, is not necessarily uniform. They further found that, by recovering the capturing agent in a state in which, among platinum group elements adsorbed onto the capturing agent, the ratio of a platinum group element adsorbed in the form of a platinum group element complex in an oxidized state is 50 mol% or more, it is possible to increase the amount of platinum group elements captured onto the capturing agent (thus increasing the capture rate), thereby achieving a high recovery rate.

In the recovery method according to the present invention, it is sufficient to recover a platinum group element by adsorbing a platinum group element onto a capturing agent in a state in which 50 mol% or more of the platinum group element adsorbed onto the capturing agent is in the form of a platinum group element complex in an oxidized state, but it is more preferable to recover the platinum group element by adsorbing it onto the capturing agent in a state in which 60 mol% or more, more preferably 65 mol% or more, further preferably 68 mol% or more of the platinum group element adsorbed onto the capturing agent is in the form of a platinum group element complex in an oxidized state. In addition, the upper limit of the platinum group element adsorbed in the form of a platinum group element complex in an oxidized state is not particularly limited, but the upper limit is preferably 99 mol% or less.

Further, in the recovery method according to the present invention, it is sufficient to recover a platinum group element by adsorbing a platinum group element onto a capturing agent in a state in which 50 mol% or more of the platinum group element adsorbed onto the capturing agent is in the form of a platinum group element complex in an oxidized state; however, in view of increasing the amount of platinum group element captured by the capturing agent, the platinum group element is more preferably recovered by being adsorbed onto the capturing agent in a state in which 50 mol% or more of a platinum group element adsorbed onto the capturing agent is in the form of a platinum group element complex in a divalent or higher-valent oxidized state. The ratio of the platinum group element in the form of a platinum group element complex in a divalent or higher-valent oxidized state is preferably 60 mol% or more, more preferably 65 mol% or more, further preferably 68 mol% or more. The upper limit is not particularly limited, but the upper limit is preferably 99 mol% or less.

The ratio of the platinum group element adsorbed in the form of a platinum group element complex in an oxidized state and the ratio of the platinum group element adsorbed in the form of a platinum group element complex in a divalent or higher-valent oxidized state can be determined, for example, by performing XAFS measurement as shown in the later-described Examples, thereby measuring the valence ratio of the platinum group element.

In the recovery method according to the present invention, a capturing agent is brought into contact with a solution containing a platinum group element to adsorb the platinum group element onto the capturing agent. In this method, it is considered that the ratio of a platinum group element complex in an oxidized state (and the ratio of a platinum group element complex in a divalent or higher-valent oxidized state) in the platinum group elements adsorbed onto the capturing agent is close to the ratio of a platinum group element complex in an oxidized state (and the ratio of a platinum group element complex in a divalent or higher-valent oxidized state) in the solution containing the platinum group element. That is, the ability of the capturing agent for capturing a platinum group element is almost the same regardless of the state of the platinum group element, i.e., regardless of whether the platinum group element is in the form of a platinum group element complex in an oxidized state (and a platinum group element complex in a divalent or higher-valent oxidized state) or not. Therefore, it is considered that the above ratio in the platinum group element adsorbed onto the capturing agent and the above ratio in the solution containing a platinum group element are close. Therefore, in the recovery method according to the present invention, it is preferable to increase the ratio of the platinum group element complex in an oxidized state (and the ratio of the platinum group element complex in a divalent or higher-valent oxidized state) in the platinum group elements contained in the solution containing a platinum group element to the above range and perform the adsorption onto a capturing agent in this state.

In the recovery method according to the present invention, examples of the platinum group element include ruthenium, rhodium, palladium, osmium, iridium, and platinum. Of these, palladium and rhodium are preferable, and palladium is more preferable.

It is sufficient that the recovery method according to the present invention is embodied such that a platinum group element is recovered by adsorbing it onto a capturing agent in a state in which 50 mol% or more of the platinum group element adsorbed onto the capturing agent is in the form of a platinum group element complex in an oxidized state, and the specific method thereof is not particularly limited. However, for example, preferable is a method in which the recovery of a platinum group element contained in a solution containing a platinum group element by adsorption onto a capturing agent is initiated in a state in which the solution containing a platinum group element is simultaneously in contact with a metal-free oxidizing agent, a complexing agent, and a capturing agent, or a method in which the solution containing a platinum group element is brought simultaneously into contact with a metal-free oxidizing agent and a complexing agent and then the resulting solution is brought into contact with a capturing agent, thereby initiating the recovery of a platinum group element contained in a solution containing a platinum group element by adsorption onto a capturing agent.

More specifically, it is preferable to have a solution containing a platinum group element in a state in which a metal-free oxidizing agent, a complexing agent, and/or a capturing agent are present simultaneously, and heat the reaction solution in such a state preferably at a temperature of 35 to 150°C, more preferably at a temperature of 40 to 140°C, thereby initiating the recovery process of the platinum group element contained in the solution containing a platinum group element. That is, it is preferable to initiate the recovery process of the platinum group element in a state in which the metal-free oxidizing agent and the complexing agent are present simultaneously (i.e., it is preferable to initiate the recovery process by raising the temperature to the above-mentioned temperature). In this process, in view of enhancing the effects of the present invention, it is preferable to have a state in which also a capturing agent is simultaneously present in addition to the metal-free oxidizing agent and the complexing agent, and initiate the recovery process of the platinum group element contained in the solution containing a platinum group element by raising the temperature of the solution in such a state to the above-mentioned temperature.

By initiating the recovery process of the platinum group element in a state in which a metal-free oxidizing agent, a complexing agent, and/or a capturing agent are simultaneously present, it is possible to more effectively advance the oxidation reaction of the platinum group element contained in the solution containing a platinum group element. Then, it is possible to appropriately increase the ratio of the platinum group element in the form of a platinum group element complex in an oxidized state among the platinum group elements contained in the solution containing a platinum group element. As a result, it is possible to preferably ensure that the ratio of the platinum group element adsorbed in the form of a platinum group element complex in an oxidized state is 50 mol% or more among the platinum group elements adsorbed onto the capturing agent. In particular, according to the knowledge of the present inventors, when the recovery process is initiated in a state in which one of a metal-free oxidizing agent and a complexing agent is absent, the ratio of the platinum group element in the form of a platinum group element complex in an oxidized state among the platinum group elements contained in the solution containing a platinum group element often does not effectively increase even if the recovery process is advanced. However, by initiating the recovery process of the platinum group element in a state in which a metal-free oxidizing agent, a complexing agent, and/or a capturing agent are present simultaneously, it is possible to appropriately increase the ratio of the platinum group element in the form of a platinum group element complex in an oxidized state among the platinum group elements contained in the solution containing a platinum group element with the progress of the recovery process.

The capturing agent may also be present simultaneously at the start of the recovery process of the platinum group element, or may be simultaneously present, for example, by adding the capturing agent to the reaction system after the start of the recovery process of the platinum group element, allowing it to be contained in the reaction system. Furthermore, it is also possible to use a method in which the recovery process of the platinum group element is initiated in a state in which a metal-free oxidizing agent and a complexing agent are present simultaneously in a solution containing a platinum group element, and the solution is made to have a state in which the ratio of a platinum group element complex in an oxidized state is 50 mol% or more by the reaction, the resulting solution is then passed through a column filled with a capturing agent, and the platinum group element is adsorbed onto the capturing agent in a state in which the ratio of the platinum group element adsorbed in the form of a platinum group element complex in an oxidized state is 50 mol% or more among the platinum group elements adsorbed onto the capturing agent, thereby recovering the platinum group element.

The metal-free oxidizing agent is not particularly limited, and any agent that acts as an oxidizing agent and does not contain any metal may be used. Examples thereof include iodine, peroxides such as hydrogen peroxide, peracetic acid, and perbenzoic acid; air; oxygen; and the like. Of these, hydrogen peroxide, air, and oxygen are preferable.

When air or oxygen is used as the metal-free oxidizing agent, a method of introducing air or oxygen by continuously blowing it into a solution containing a platinum group element under an atmospheric pressure condition, or a method of pressurizing and injecting air or oxygen under a predetermined pressurizing condition may be used. In this case, the pressurizing condition is preferably 0.2 to 10 MPa, more preferably 0.4 to 8 MPa, further preferably 0.5 to 5 MPa, particularly preferably 0.7 to 2.5 MPa. In addition, when oxygen is used, oxygen may be mixed with an inert gas such as nitrogen. In this case, the oxygen concentration is preferably 0.2 to 90 vol%, more preferably 0.4 to 70 vol%, further preferably 1 to 50 vol%, and particularly preferably 2 to 12 vol%.

Furthermore, when a peroxide, such as hydrogen peroxide, is used as the metal-free oxidizing agent, the amount of the peroxide such as hydrogen peroxide is preferably as much as 0.5 to 200 molar equivalents, more preferably 1 to 150 molar equivalents, even more preferably 2 to 100 molar equivalents, particularly preferably 5 to 50 molar equivalents with respect to per molar amount of the platinum group elements contained in the solution containing a platinum group element. It is sufficient that at least a portion of the metal-free oxidizing agent in the total amount thereof used in the recovery process is present at the time of initiating the recovery process of the platinum group element, and, for example, more metal-free oxidizing agent may be added after the recovery process of the platinum group element is initiated.

The complexing agent is not particularly limited, and any complexing agent that has a complexing ability with respect to platinum group elements and is capable of forming a complex in an oxidized state may be used, but a complexing agent represented by General Formula (1) below is preferably used.

CₙHₘNₚO_{q}Xᵣ (1)

where X is an element other than C, H, N, and O, n = 1 to 13, m = 1 to 18, p = 0 to 4, q = 0 to 4, r = 0 to 4, and at least one of p and q is 1 or more.

In General Formula (1) above, X is, for example, S, P, or halogen, and among these, S is preferable. Further, n is 1 to 13, preferably 2 to 12, more preferably 3 to 12; m is 1 to 18, preferably 2 to 18, more preferably 4 to 18; p is 0 to 4, preferably 0 to 2; q is 0 to 4, preferably 0 to 2; and r is 0 to 4, preferably 0 to 1.

Examples of the compounds represented by General Formula (1) above include organic ammonium salts such as ammonium acetate; amines such as ethylenediamine and triethylenetetramine; oximes such as dimethylglyoxime; imines such as bipyridine and phenanthroline; ketones such as acetylacetone and carbamide; glycine; thiourea; 1-methylpiperazine; and the like. Of these, organic ammonium salts, amines, and imines are preferable, and ammonium acetate, triethylenetetramine, and phenanthroline are particularly suitable.

It is also preferable to use an inorganic ammonium salt as the complexing agent, in addition to the compounds represented by General Formula (1) above. That is, both organic and inorganic ammonium salts can be preferably used. Examples of the inorganic ammonium salt include ammonium halides, and suitable examples of the ammonium halides include ammonium bromide and ammonium chloride.

The amount of the complexing agent to be used is preferably 1 to 200 molar equivalents, more preferably 2 to 150 molar equivalents, even more preferably 3 to 100 molar equivalents, particularly preferably 20 to 80 molar equivalents with respect to per molar amount of the platinum group elements contained in the solution containing a platinum group element. Using the complexing agent in the above range enables the recovery of the platinum group element with higher efficiency. It is sufficient that at least a portion of the complexing agent among the total amount used in the recovery process is present at the time of initiating the recovery process of the platinum group element, and, for example, more complexing agent may be added after the recovery process of the platinum group element is initiated. However, in view of increasing the efficiency in the recovery of the platinum group element, it is desirable that the entire amount of the complexing agent used in the recovery process is present at the time of initiating the recovery process of the platinum group element.

The capturing agent is also not particularly limited, and any capturing agent capable of capturing or adsorbing a platinum group element may be used. Examples of the capturing agent include resin, silica, carbon black, and the like. In view of the capturing or adsorbing ability, silica is preferable, and surface-treated silica is particularly preferable. Examples of surface-treated silica include thiol-modified silica, silanol-modified silica, amine-modified silica, thiourea-modified silica, phosphate-modified silica, carbamate-modified silica, and the like. Of these, thiol-modified silica, silanol-modified silica, and amine-modified silica are preferable.

The amount of the capturing agent to be used is preferably 1 to 500-fold amount by weight, more preferably 2 to 300-fold amount by weight, even more preferably 5 to 100-fold amount by weight, and particularly preferably 35 to 65-fold amount by weight with respect to per weight of the platinum group element contained in the solution containing a platinum group element. Using the capturing agent in the above range enables the recovery of the platinum group element with higher efficiency. It is sufficient that at least a portion of the capturing agent among the total amount used in the recovery process is present at the time of initiating the recovery process of the platinum group element, and, for example, more capturing agent may be added after the recovery process of the platinum group element is initiated. However, in view of increasing the efficiency in the recovery of the platinum group element, it is desirable that the entire amount of the capturing agent used in the recovery process is present at the time of initiating the recovery process of the platinum group element.

In the recovery method according to the present invention, the time of the recovery process is not particularly limited, but is preferably 1 to 96 hours, more preferably 2 to 48 hours, and further preferably 4 to 24 hours. By selecting the time of the recovery process within the above ranges, it is possible to recover platinum group elements more efficiently and with a higher recovery rate.

Further, in the recovery method according to the present invention, by initiating the recovery process of the platinum group element in a state in which the metal-free oxidizing agent, the complexing agent, and the capturing agent are present simultaneously, performing the recovery process, and then performing filtration or the like of the solution after the recovery process to recover (filter out) the capturing agent onto which the platinum group element is adsorbed, thereby separating the platinum group element from the solution after the recovery process, it is possible to recover the platinum group element in a state of being adsorbed onto the capturing agent.

According to the recovery method according to the present invention, a platinum group element is recovered by adsorbing a platinum group element onto a capturing agent in a state in which 50 mol% or more of the platinum group element adsorbed onto the capturing agent is in the form of a platinum group element complex in an oxidized state. Therefore, it is possible to recover the platinum group element with a high recovery rate. As a result, the platinum group element can be suitably reused with a high recycling rate. Further, according to the recovery method according to the present invention, it is possible to recover platinum group elements at a high recovery rate, thereby increasing the removal rate of platinum group elements in a solution containing a platinum group element. Therefore, for example, by using a solution containing a polymer, more specifically, a solution of a hydrogenated conjugated diene rubber, such as a hydrogenated nitrile rubber, as the solution containing a platinum group element in the recovery process in the present invention, it is possible to give a hydrogenated conjugated diene rubber (polymer), such as a hydrogenated nitrile rubber, with a reduced content of the platinum group element. In particular, by reducing the content of platinum group element in the hydrogenated conjugated diene rubber (polymer), such as a hydrogenated nitrile rubber, it is possible to effectively suppress coloring of the hydrogenated conjugated diene rubber caused by a platinum group element while maintaining desirable mechanical strength, such as tensile strength.

### EXAMPLES

The present invention is described more specifically below with reference to Examples and Comparative Examples, provided that the present invention is not limited to the Examples. In the following, "part" is on a weight basis unless otherwise specified. The test or evaluation methods of physical properties and characteristics are as follows.

### <Iodine Value>

The iodine value of hydrogenated nitrile rubber was measured according to JIS K6235.

### <Mooney Viscosity>

The Mooney viscosity of hydrogenated nitrile rubber (polymer Mooney viscosity) was measured at 100°C according to JIS K6300.

### <Palladium Content>

The palladium content was measured using an atomic absorption analysis.

The atomic absorption apparatus used for the analysis was a Hitachi High-Tech Science ZA-3000, with furnace and flame methods according to need.

### <Measurement of Ratio based on Valence of Palladium>

A dried capturing agent was attached to a substrate such as a metal plate, and was subjected to XAFS (SPring-8 BL14B2) measurement. The valence was checked from the measurement result, and the ratio of each valence was determined for the palladium adsorbed onto the capturing agent by fitting. The analysis was performed using Pd K-edge at 24155-24715 eV, fluorescence yield method, Si(311), with a scan time of 32 minutes per sample.

### <Preparation Example 1 (Preparation of Hydrogenated Nitrile Rubber Solution 1)>

In a reactor, 0.2 parts of sodium carbonate were dissolved in 200 parts of ion exchanged water, and 2.3 parts of potassium fatty acid soap (potassium salt of fatty acid) were added thereto, thereby preparing a soap aqueous solution. Then, to this soap aqueous solution, 38 parts of acrylonitrile and 0.45 parts of t-dodecyl mercaptan (molecular weight modifier) were added in this order, and after purging of the internal gas three times with nitrogen, 62 parts of 1,3-butadiene was added. Subsequently, the reactor was kept at 5°C, and 0.1 parts of cumene hydroperoxide (polymerization initiator), and appropriate amounts of a reducing agent and a chelating agent were added to initiate a polymerization reaction. Further, at the point where the polymerization conversion ratio reached 80%, 0.05 parts of an aqueous hydroquinone solution (polymerization terminator) at a concentration of 1% by weight and 0.05 parts of N-isopropylhydroxylamine (polymerization terminator) were added to terminate the polymerization reaction. Then, 0.4 parts of alkylated phenol compound was added, and the residual monomers were removed using a rotary evaporator at a water temperature of 60°C, thereby obtaining a nitrile rubber latex (solid content concentration = about 25% by weight). The pH of the obtained latex was 9.6.

Subsequently, the nitrile rubber latex obtained above was added to an aqueous solution of aluminum sulfate in an amount equal to 3% by weight of the nitrile rubber content in the latex obtained above. The solution was stirred to coagulate the latex, which was then washed with water and an alkali aqueous solution, filtered off, and vacuum-dried at 60°C for 12 hours, thereby obtaining a solid-state nitrile rubber. Then, the obtained solid-state nitrile rubber was dissolved in acetone to a concentration of 14% by weight, and this was placed in an autoclave. Then, 500 ppm by weight (in terms of palladium metal amount) of a silica-supported palladium catalyst (a catalyst containing palladium metal supported on silica) with respect to the nitrile rubber was added, followed by a hydrogenation reaction at a hydrogen pressure of 3.0 MPa.

After the hydrogenation reaction was completed, the reaction system was cooled to room temperature, and the hydrogen in the system was purged with nitrogen. The solution of the hydrogenated nitrile rubber obtained by the hydrogenation reaction was then filtered to recover the silica-supported palladium catalyst, and the obtained filtrate was used as a hydrogenated nitrile rubber solution 1 as a sample to be subjected to a catalyst recovery process.

A portion of the obtained hydrogenated nitrile rubber solution 1 was collected, and the collected portion was placed into a ten-fold amount of water to cause the polymer to precipitate, and then the obtained polymer was dried for 24 hours by a vacuum dryer, thereby obtaining a solid-state hydrogenated nitrile rubber. As for the composition of the hydrogenated nitrile rubber, the hydrogenated nitrile rubber contained 36% by weight of acrylonitrile units and 74% by weight of butadiene units (including the saturated moiety), with an iodine value of 8 and a polymer Mooney viscosity [ML1+4, 100°C] of 63. The obtained solid-state hydrogenated nitrile rubber was measured by atomic absorption analysis to determine the palladium metal amount in the hydrogenated nitrile rubber, with the result that the palladium metal amount was 250 ppm by weight. From this result, it can be said that the palladium metal amount in the hydrogenated nitrile rubber solution 1 is 250 ppm by weight.

### <Preparation Example 2 (Preparation of Hydrogenated Nitrile Rubber Solution 2)>

The same polymerization and hydrogenation reaction as those in Preparation Example 1 were performed except that the amount of the silica-supported palladium catalyst was changed to 400 ppm by weight in terms of palladium metal amount. The solution of the hydrogenated nitrile rubber obtained by the hydrogenation reaction was then filtered to recover the silica-supported palladium catalyst, and the obtained filtrate was used as a hydrogenated nitrile rubber solution 2 as a sample to be subjected to a catalyst recovery process.

A portion of the obtained hydrogenated nitrile rubber solution 2 was collected, and the same measurement as in Example 1 was performed, with the result that, as its composition, the hydrogenated nitrile rubber contained 36% by weight of acrylonitrile units and 74% by weight of butadiene units (including the saturated moiety), with an iodine value of 9 and a polymer Mooney viscosity [ML1+4, 100°C] of 62. The obtained solid-state hydrogenated nitrile rubber was measured by atomic absorption analysis to determine the palladium metal amount in the hydrogenated nitrile rubber, with the result that the palladium metal amount was 190 ppm by weight. From this result, it can be said that the palladium metal amount in the hydrogenated nitrile rubber solution 2 is 190 ppm by weight.

### <Preparation Example 3 (Preparation of Hydrogenated Nitrile Rubber Solution 3)>

The same polymerization and hydrogenation reaction as those in Preparation Example 1 were performed except that the amount of the silica-supported palladium catalyst was changed to 330 ppm by weight in terms of palladium metal amount. The solution of the hydrogenated nitrile rubber obtained by the hydrogenation reaction was then filtered to recover the silica-supported palladium catalyst, and the obtained filtrate was used as a hydrogenated nitrile rubber solution 3 as a sample to be subjected to a catalyst recovery process.

A portion of the obtained hydrogenated nitrile rubber solution 3 was collected, and the same measurement as that of Example 1 was performed, with the result that, as its composition, the hydrogenated nitrile rubber contained 36% by weight of acrylonitrile units and 74% by weight of butadiene units (including the saturated moiety), with an iodine value of 12 and a polymer Mooney viscosity [ML1+4, 100°C] of 59. The obtained solid-state hydrogenated nitrile rubber was measured by atomic absorption analysis to determine the palladium metal amount in the hydrogenated nitrile rubber, with the result that the palladium metal amount was 160 ppm by weight. From this result, it can be said that the palladium metal amount in the hydrogenated nitrile rubber solution 3 is 160 ppm by weight.

### <Preparation Example 4 (Preparation of Hydrogenated Nitrile Rubber Solution 4)>

Polymerization was performed in the same manner as in Preparation Example 1 to obtain nitrile rubber latex. The obtained nitrile rubber latex was then coagulated, washed with water, and dried in the same manner as in Example 1 to obtain a solid-state nitrile rubber, which was then dissolved in acetone, thereby obtaining a nitrile rubber solution dissolved in acetone with a concentration of 15% by weight of nitrile rubber.

Subsequently, in a reactor different from the one described above, 1 part of palladium acetate, 3 parts of polymethylvinylether, and 3 parts of hydrazine (aqueous solution at a concentration of 10% by weight) were mixed with 800 parts of acetone, thereby obtaining a solution of palladium acetate catalyst.

Subsequently, to the nitrile rubber solution dissolved in acetone obtained above, the solution of palladium acetate catalyst prepared above was added in an amount of 250 ppm by weight in terms of palladium metal amount with respect to the nitrile rubber, which was then placed in an autoclave with a stirrer, and nitrogen gas was flowed into it for 10 minutes to remove dissolved oxygen. Then, the system gas was purged twice with hydrogen gas, and hydrogen was pressurized to 5 MPa, followed by heating to 50°C and stirring for 6 hours to perform a hydrogenation reaction, thereby obtaining a hydrogenated nitrile rubber solution dissolved in acetone. The obtained hydrogenated nitrile rubber solution dissolved in acetone was used as a hydrogenated nitrile rubber solution 4 as a sample to be subjected to a catalyst recovery process.

A portion of the obtained hydrogenated nitrile rubber solution 4 was collected, and the same measurement as that of Example 1 was performed, with the result that, as its composition, the hydrogenated nitrile rubber contained 36% by weight of acrylonitrile units and 74% by weight of butadiene units (including the saturated moiety), with an iodine value of 7.4 and a polymer Mooney viscosity [ML1+4, 100°C] of 65. The obtained solid-state hydrogenated nitrile rubber was measured by atomic absorption analysis to determine the palladium metal amount in the hydrogenated nitrile rubber, with the result that the palladium metal amount was 250 ppm by weight. From this result, it can be said that the palladium metal amount in the hydrogenated nitrile rubber solution 4 is 250 ppm by weight.

### <Preparation Example 5 (Preparation of Hydrogenated Nitrile Rubber Solution 5)>

In a reactor, 0.2 parts of sodium carbonate was dissolved in 200 parts of ion exchanged water, and 2.25 parts of potassium fatty acid soap (potassium salt of fatty acid) were added thereto, thereby preparing a soap aqueous solution. Then, to this soap aqueous solution, 13 parts of acrylonitrile, 49 parts of n-butyl acrylate, and 0.45 parts of t-dodecyl mercaptan (molecular weight modifier) were added, and, after purging of the internal gas three times with nitrogen, 21 parts of 1,3-butadiene was added. Subsequently, the reactor was kept at 5°C, and 0.1 parts of cumene hydroperoxide (polymerization initiator), and appropriate amounts of a reducing agent and a chelating agent were added to initiate a polymerization reaction. At the point where the reaction conversion ratio reached 60%, 8 parts of acrylonitrile and 9 parts of 1,3-butadiene were added, and at the point where the polymerization conversion ratio reached 85%, 0.05 parts of an aqueous hydroquinone solution (polymerization terminator) at a concentration of 10% by weight and 0.05 parts of N-isopropylhydroxylamine (polymerization terminator) were added to terminate the polymerization reaction. Then, 0.45 parts of alkylated phenol compound were added, and the residual monomers were removed using a rotary evaporator at a water temperature of 60°C, thereby obtaining a nitrile rubber latex (solid content concentration = about 25% by weight). The pH of the obtained latex was 10.1.

Subsequently, the nitrile rubber latex obtained above was added to an aqueous solution of aluminum sulfate in an amount equal to 3% by weight of the nitrile rubber content in the latex obtained above. The solution was stirred to coagulate the latex, which was then washed with water and an alkali aqueous solution, filtered off, and vacuum-dried at 60°C for 12 hours, thereby obtaining a solid-state nitrile rubber. Then, the obtained solid-state nitrile rubber was dissolved in acetone to a concentration of 12% by weight, and this was placed in an autoclave. Then, 500 ppm by weight (in terms of palladium metal amount) of a silica-supported palladium catalyst (a catalyst containing palladium metal supported on silica) with respect to the nitrile rubber was added, followed by a hydrogenation reaction at a hydrogen pressure of 3.0 MPa.

After the hydrogenation reaction was completed, the reaction system was cooled to room temperature, and the hydrogen in the system was purged with nitrogen. The solution of the hydrogenated nitrile rubber obtained by the hydrogenation reaction was then filtered to recover the silica-supported palladium catalyst, and the obtained filtrate was used as a hydrogenated nitrile rubber solution 5 as a sample to be subjected to a catalyst recovery process.

A portion of the obtained hydrogenated nitrile rubber solution 5 was collected, and the same measurement as in Example 1 was performed, with the result that, as its composition, the hydrogenated nitrile rubber contained 19% by weight of acrylonitrile units, 38% by weight of butadiene units (including the saturated moiety), 43% by weight of n-butyl acrylate units, with an iodine value of 10.9 and a polymer Mooney viscosity [ML1+4, 100°C] of 43. The obtained solid-state hydrogenated nitrile rubber was measured by atomic absorption analysis to determine the palladium metal amount in the hydrogenated nitrile rubber, with the result that the palladium metal amount was 250 ppm by weight. From this result, it can be said that the palladium metal amount in the hydrogenated nitrile rubber solution 5 is 250 ppm by weight.

### <Example 1>

The hydrogenated nitrile rubber solution 1 obtained in Preparation Example 1 was placed in a pressure vessel equipped with a stirring device. To this solution, thiol-modified silica (trade name: "SH SILICA", available from Fuji Silysia Chemical Ltd., same hereinafter) was added as a capturing agent in an amount of 50 times the amount of palladium metal contained in the hydrogenated nitrile rubber solution 1 in terms of weight ratio. Subsequently, triethylenetetramine (hereinafter referred to as "TETA" as appropriate) as a complexing agent was added to this solution in an amount of 60 times the amount of palladium metal contained in the hydrogenated nitrile rubber solution 1 in terms of molar ratio. Subsequently, the sample was pressurized to 1 MPa with 7 vol% of oxygen, then heated to 55°C by heating, followed by stirring at 55°C for 24 hours while maintaining the pressurization by oxygen. After the reaction was completed, the catalyst recovery process was performed by recovering the thiol-modified silica from the reaction mixture through filtration.

The obtained filtrate was added to a ten-fold amount of water to cause the rubber component to precipitate. The obtained rubber component was collected, and vacuum-dried for 24 hours using a vacuum dryer, thereby obtaining hydrogenated nitrile rubber. The palladium metal amount in the obtained hydrogenated nitrile rubber was 70 ppm by weight. Further, the thiol-modified silica recovered by filtration was washed with acetone to remove the rubber component adhering thereto. Subsequently, after drying, a portion of the dried thiol-modified silica was subjected to XAFS measurement according to the method described above, and the weight ratio of palladium in a divalent or higher-valent oxidized state in the palladium recovered by thiol-modified silica was determined. Table 1 shows the results. Further, wet digestion was performed using a portion of the dried thiol-modified silica to obtain a solution for measurement, which was then subjected to atomic absorption analysis to determine the palladium metal amount captured and recovered by the thiol-modified silica as a capturing agent, with the result that the weight per hydrogenated nitrile rubber was 155 ppm by weight.

Then, based on the palladium metal amount (250 ppm by weight) in the hydrogenated nitrile rubber before the catalyst recovery process, the palladium metal amount (70 ppm by weight) in the hydrogenated nitrile rubber after the catalyst recovery process, and the palladium metal amount (155 ppm by weight) captured and recovered by the capturing agent (thiol-modified silica), the catalyst removal rate and the catalyst recovery rate were calculated according to the following formulae. Table 1 shows the results. Catalyst removal rate (%) = { (palladium metal amount in hydrogenated nitrile rubber before catalyst recovery process - palladium metal amount in hydrogenated nitrile rubber after catalyst recovery process) / palladium metal amount in hydrogenated nitrile rubber before catalyst recovery process} × 100 Catalyst recovery rate (%) = (palladium metal amount captured and recovered by capturing agent (thiol-modified silica) / palladium metal amount in hydrogenated nitrile rubber before catalyst recovery process) × 100

### <Example 2>

The catalyst recovery process was performed in the same manner as in Example 1 except that the hydrogenated nitrile rubber solution 2 obtained in Preparation Example 2 was used instead of the hydrogenated nitrile rubber solution 1 obtained in Preparation Example 1, silanol-modified silica was used in the amount shown in Table 1 instead of the thiol-modified silica, the amount of the triethylenetetramine was changed to the amount shown in Table 1, 8 vol% of oxygen was used instead of 7 vol% of oxygen, and the reaction time was changed to the time shown in Table 1.

The hydrogenated nitrile rubber was obtained in the same manner as in Example 1, and the palladium metal amount in the obtained hydrogenated nitrile rubber was 67 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 112 ppm by weight. Table 1 shows the catalyst removal rate and catalyst recovery rate obtained from these results.

### <Example 3>

The catalyst recovery process was performed in the same manner as in Example 1 except that the hydrogenated nitrile rubber solution 2 obtained in Preparation Example 2 was used instead of the hydrogenated nitrile rubber solution 1 obtained in Preparation Example 1, amine-modified silica (trade name: "NH SILICA", available from Fuji Silysia Chemical Ltd., same hereinafter) was used in the amount shown in Table 1 instead of the thiol-modified silica, the amount of the triethylenetetramine was changed to the amount shown in Table 1, 7 vol% of oxygen was not used and a hydrogen peroxide solution was used instead in an amount of 15 times the amount of palladium metal contained in the hydrogenated nitrile rubber solution 2 in terms of molar ratio, and the hydrogen peroxide solution was further added after stirring at 55°C for 3 hours in an amount of 15 times the amount of palladium metal contained in the hydrogenated nitrile rubber solution 2 in terms of molar ratio, and the reaction time was changed to the time shown in Table 1.

The hydrogenated nitrile rubber was obtained in the same manner as in Example 1, and the palladium metal amount in the obtained hydrogenated nitrile rubber was 44 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 130 ppm by weight. Table 1 shows the catalyst removal rate and catalyst recovery rate obtained from these results.

### <Example 4>

The catalyst recovery process was performed in the same manner as in Example 3 except that the amount of triethylenetetramine was changed to the amount shown in Table 1, and the addition amount of the hydrogen peroxide solution was 0.12 times the amount of palladium metal contained in the hydrogenated nitrile rubber solution 2 in terms of molar ratio, and, after the hydrogen peroxide solution in an amount of 0.12 times was added, the temperature was raised to 55°C by heating, and stirring was performed for 6 hours at 55°C while continuously adding the hydrogen peroxide solution in an amount of 0.12 times the amount of palladium metal contained in the hydrogenated nitrile rubber solution 2 in terms of molar ratio every 1 minute.

The hydrogenated nitrile rubber was obtained in the same manner as in Example 1, and the palladium metal amount in the obtained hydrogenated nitrile rubber was 48 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 132 ppm by weight. Table 1 shows the catalyst removal rate and catalyst recovery rate obtained from these results.

### <Example 5>

The catalyst recovery process was performed in the same manner as in Example 1 except that the hydrogenated nitrile rubber solution 3 obtained in Preparation Example 3 was used instead of the hydrogenated nitrile rubber solution 1 obtained in Preparation Example 1, amine-modified silica was used in the amount shown in Table 1 instead of the thiol-modified silica, ammonium bromide was used in the amount shown in Table 1 instead of triethylenetetramine, 7 vol% of oxygen was not used and a hydrogen peroxide solution was used instead in an amount of 30 times the amount of palladium metal contained in the hydrogenated nitrile rubber solution 3 in terms of molar ratio, and the reaction time was changed to the time shown in Table 1.

The hydrogenated nitrile rubber was obtained in the same manner as in Example 1, and the palladium metal amount in the obtained hydrogenated nitrile rubber was 20 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 115 ppm by weight. Table 1 shows the catalyst removal rate and catalyst recovery rate obtained from these results.

### <Example 6>

The catalyst recovery process was performed in the same manner as in Example 1 except that ammonium chloride was used in the amount shown in Table 1 instead of triethylenetetramine, 7 vol% of oxygen was not used and a hydrogen peroxide solution was used instead in an amount of 15 times the amount of palladium metal contained in the hydrogenated nitrile rubber solution 1 in terms of molar ratio, and the reaction time was changed to the time shown in Table 1.

The hydrogenated nitrile rubber was obtained in the same manner as in Example 1, and the palladium metal amount in the obtained hydrogenated nitrile rubber was 25 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 206 ppm by weight. Table 1 shows the catalyst removal rate and catalyst recovery rate obtained from these results.

### <Example 7>

The catalyst recovery process was performed in the same manner as in Example 1 except that the hydrogenated nitrile rubber solution 2 obtained in Preparation Example 2 was used instead of the hydrogenated nitrile rubber solution 1 obtained in Preparation Example 1, phenanthroline was used in the amount shown in Table 1 instead of triethylenetetramine, 7 vol% of oxygen was not used and a hydrogen peroxide solution was used instead in an amount of 10 times the amount of palladium metal contained in the hydrogenated nitrile rubber solution 2 in terms of molar ratio, and the hydrogen peroxide solution was further added after stirring at 55°C for 3 hours in an amount of 10 times the amount of palladium metal contained in the hydrogenated nitrile rubber solution 2 in terms of molar ratio, and the reaction time was changed to the time shown in Table 1.

The hydrogenated nitrile rubber was obtained in the same manner as in Example 1, and the palladium metal amount in the obtained hydrogenated nitrile rubber was 65 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 130 ppm by weight. Table 1 shows the catalyst removal rate and catalyst recovery rate obtained from these results.

In Example 7, the catalyst removal rate and the catalyst recovery rate had different values due to measurement errors, but they were considered to be equivalent (the same applies in Examples 8, 9, 11 and 12).

### <Example 8>

The catalyst recovery process was performed in the same manner as in Example 4 except that phenanthroline was used in the amount shown in Table 1 instead of triethylenetetramine, and silanol-modified silica was used in the amount shown in Table 1 instead of the amine-modified silica.

The hydrogenated nitrile rubber was obtained in the same manner as in Example 1, and the palladium metal amount in the obtained hydrogenated nitrile rubber was 59 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 138 ppm by weight. Table 1 shows the catalyst removal rate and catalyst recovery rate obtained from these results.

### <Example 9>

The catalyst recovery process was performed in the same manner as in Example 1 except that the hydrogenated nitrile rubber solution 2 obtained in Preparation Example 2 was used instead of the hydrogenated nitrile rubber solution 1 obtained in Preparation Example 1, phenanthroline was used in the amount shown in Table 1 instead of triethylenetetramine, 7 vol% of oxygen was supplied by continuously blowing it at atmospheric pressure in an open system instead of supplying it under a 1 Mpa pressurizing condition, and the reaction time was changed to the time shown in Table 1.

The hydrogenated nitrile rubber was obtained in the same manner as in Example 1, and the palladium metal amount in the obtained hydrogenated nitrile rubber was 42 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 152 ppm by weight. Table 1 shows the catalyst removal rate and catalyst recovery rate obtained from these results.

### <Example 10>

The catalyst recovery process was performed in the same manner as in Example 5 except that phenanthroline was used in the amount shown in Table 1 instead of ammonium bromide, the amount of the hydrogen peroxide solution was changed to the amount shown in Table 1, and thiol-modified silica was used in the amount shown in Table 1 instead of the amine-modified silica.

The hydrogenated nitrile rubber was obtained in the same manner as in Example 1, and the palladium metal amount in the obtained hydrogenated nitrile rubber was 39 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 120 ppm by weight. Table 1 shows the catalyst removal rate and catalyst recovery rate obtained from these results.

### <Example 11>

The catalyst recovery process was performed in the same manner as in Example 5 except that ammonium acetate was used in the amount shown in Table 1 instead of ammonium bromide, the amount of the hydrogen peroxide solution was changed to the amount shown in Table 1, silanol-modified silica was used in the amount shown in Table 1 instead of the amine-modified silica, and the reaction time was changed to the time shown in Table 1.

The hydrogenated nitrile rubber was obtained in the same manner as in Example 1, and the palladium metal amount in the obtained hydrogenated nitrile rubber was 53 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 113 ppm by weight. Table 1 shows the catalyst removal rate and catalyst recovery rate obtained from these results.

### <Example 12>

The catalyst recovery process was performed in the same manner as in Example 1 except that silanol-modified silica was used in the amount shown in Table 1 instead of the thiol-modified silica, ammonium acetate was used in the amount shown in Table 1 instead of triethylenetetramine, 7 vol% of oxygen was not used and a hydrogen peroxide solution was used instead in an amount of 15 times the amount of palladium metal contained in the hydrogenated nitrile rubber solution 1 in terms of molar ratio, and the reaction time was changed to the time shown in Table 1.

The hydrogenated nitrile rubber was obtained in the same manner as in Example 1, and the palladium metal amount in the obtained hydrogenated nitrile rubber was 83 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 174 ppm by weight. Table 1 shows the catalyst removal rate and catalyst recovery rate obtained from these results.

### <Example 13>

The catalyst recovery process was performed in the same manner as in Example 1 except that the hydrogenated nitrile rubber solution 4 obtained in Preparation Example 4 was used instead of the hydrogenated nitrile rubber solution 1 obtained in Preparation Example 1, ammonium chloride was used in the amount shown in Table 1 instead of triethylenetetramine, and 8 vol% of oxygen was used instead of 7 vol% of oxygen.

The hydrogenated nitrile rubber was obtained in the same manner as in Example 1, and the palladium metal amount in the obtained hydrogenated nitrile rubber was 55 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 132 ppm by weight. Table 1 shows the catalyst removal rate and catalyst recovery rate obtained from these results.

### <Example 14>

The catalyst recovery process was performed in the same manner as in Example 1 except that the hydrogenated nitrile rubber solution 5 obtained in Preparation Example 5 was used instead of the hydrogenated nitrile rubber solution 1 obtained in Preparation Example 1, ammonium chloride was used in the amount shown in Table 1 instead of triethylenetetramine, 7 vol% of oxygen was not used and a hydrogen peroxide solution was used instead in an amount of 10 times the amount of palladium metal contained in the hydrogenated nitrile rubber solution 5 in terms of molar ratio, and the hydrogen peroxide solution was further added after stirring at 55°C for 3 hours in an amount of 10 times the amount of palladium metal contained in the hydrogenated nitrile rubber solution 5 in terms of molar ratio, and the reaction time was changed to the time shown in Table 1.

The hydrogenated nitrile rubber was obtained in the same manner as in Example 1, and the palladium metal amount in the obtained hydrogenated nitrile rubber was 43 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 180 ppm by weight. Table 1 shows the catalyst removal rate and catalyst recovery rate obtained from these results.

### <Example 15>

The catalyst recovery process was performed in the same manner as in Example 1 except that the hydrogenated nitrile rubber solution 2 obtained in Preparation Example 2 was used instead of the hydrogenated nitrile rubber solution 1 obtained in Preparation Example 1, the thiol-modified silica as the capturing agent was not used, ammonium acetate was used in the amount shown in Table 1 instead of triethylenetetramine, 7 vol% of oxygen was not used and a hydrogen peroxide solution was used instead in an amount of 10 times the amount of palladium metal contained in the hydrogenated nitrile rubber solution 2 in terms of molar ratio, and the hydrogen peroxide solution was further added after stirring at 55°C for 3 hours in an amount of 10 times the amount of palladium metal contained in the hydrogenated nitrile rubber solution 2 in terms of molar ratio, and the reaction time was changed to the time shown in Table 1. Thereafter, the hydrogenated nitrile rubber solution having been subjected to the catalyst recovery process was passed through a column filled with thiourea-modified ion exchange resin (capturing agent).

The hydrogenated nitrile rubber was obtained in the same manner as in Example 1 using the solution passed through the column, and the palladium metal amount in the obtained hydrogenated nitrile rubber was 45 ppm by weight. For the thiourea-modified ion exchange resin in the column, XAFS measurement was performed in the same manner as in Example 1 to determine the weight ratio of palladium in a divalent or higher-valent oxidized state. Table 1 shows the results. Further, the palladium metal amount captured and recovered by the thiourea-modified ion exchange resin was measured in the same manner as in Example 1, with the result that the weight per hydrogenated nitrile rubber was 124 ppm by weight. Table 1 shows the catalyst removal rate and catalyst recovery rate obtained from these results.

### <Comparative Example 1>

The hydrogenated nitrile rubber solution 1 obtained in Preparation Example 1 was placed in a pressure vessel equipped with a stirring device. To this solution, triethylenetetramine was added as a complexing agent in an amount of 10 times the amount of palladium metal contained in the hydrogenated nitrile rubber solution 1 in terms of molar ratio. Subsequently, hydrogen peroxide was added in an amount of 20 times the amount of palladium metal contained in the hydrogenated nitrile rubber solution 1 in terms of molar ratio. Subsequently, the temperature was raised to 55°C by heating the solution, followed by stirring at 55°C for 5 hours. Then, thiol-modified silica as a capturing agent was added in an amount of 50 times the amount of palladium metal contained in the hydrogenated nitrile rubber solution 1 in terms of weight ratio, followed by further stirring at 55°C for 2 hours. After the reaction was completed, the catalyst recovery process was performed by recovering the thiol-modified silica from the reaction mixture through filtration.

The hydrogenated nitrile rubber was obtained in the same manner as in Example 1, and the palladium metal amount in the obtained hydrogenated nitrile rubber was 112 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 75 ppm by weight. Table 1 shows the catalyst removal rate and catalyst recovery rate obtained from these results.

### <Comparative Example 2>

The hydrogenated nitrile rubber solution 1 obtained in Preparation Example 1 was placed in a pressure vessel equipped with a stirring device. To this solution, thiol-modified silica was added as a capturing agent in an amount of 50 times the amount of palladium metal contained in the hydrogenated nitrile rubber solution 1 in terms of weight ratio. Subsequently, dimethylglyoxime as a complexing agent was added to this solution in an amount of 40 times the amount of palladium metal contained in the hydrogenated nitrile rubber solution 1 in terms of molar ratio. Subsequently, hydrogen peroxide was added in an amount of 20 times the amount of palladium metal contained in the hydrogenated nitrile rubber solution 1 in terms of molar ratio. Thereafter, the temperature was raised to 55°C by heating the solution, followed by stirring at 55°C for 6 hours. After the reaction was completed, the catalyst recovery process was performed by recovering the thiol-modified silica from the reaction mixture through filtration.

The hydrogenated nitrile rubber was obtained in the same manner as in Example 1, and the palladium metal amount in the obtained hydrogenated nitrile rubber was 237 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 12 ppm by weight. Table 1 shows the catalyst removal rate and catalyst recovery rate obtained from these results.

### <Comparative Example 3>

The hydrogenated nitrile rubber solution 1 obtained in Preparation Example 1 was placed in a pressure vessel equipped with a stirring device. After blowing of 7 vol% of oxygen into this solution was initiated at atmospheric pressure in an open system, the temperature was raised to 55°C by heating, followed by stirring at 55°C for 3 hours while continuously blowing oxygen. After 3 hours of stirring, ammonium bromide was added in an amount of 40 times the amount of palladium metal contained in the hydrogenated nitrile rubber solution 1 in terms of molar ratio, and stirring was continued at 55°C for another 3 hours while continuously blowing oxygen. Subsequently, silanol-modified silica was added to this solution in an amount of 50 times the amount of palladium metal contained in the hydrogenated nitrile rubber solution 1 in terms of weight ratio, and stirring was continued at 55°C for another 2 hours with continuous pressurization by oxygen. After the reaction was completed, the catalyst recovery process was performed by recovering silanol-modified silica from the reaction mixture through filtration.

The hydrogenated nitrile rubber was obtained in the same manner as in Example 1, and the palladium metal amount in the obtained hydrogenated nitrile rubber was 172 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 15 ppm by weight. Table 1 shows the catalyst removal rate and catalyst recovery rate obtained from these results.

### <Comparative Example 4>

The hydrogenated nitrile rubber solution 1 obtained in Preparation Example 1 was placed in a pressure vessel equipped with a stirring device. Hydrogen peroxide was added in an amount of 20 times the amount of palladium metal contained in the hydrogenated nitrile rubber solution 1 in terms of molar ratio, followed by stirring at 55°C for 3 hours. After 3 hours of stirring, aqueous ammonia was added in an amount of 30 times the amount of palladium metal contained in the hydrogenated nitrile rubber solution 1 in terms of molar ratio, and stirring was continued at 55°C for another 2 hours. Subsequently, silanol-modified silica was added to this solution in an amount of 50 times the amount of palladium metal contained in the hydrogenated nitrile rubber solution 1 in terms of weight ratio, and stirring was continued at 55°C for another 2 hours. After the reaction was completed, the catalyst recovery process was performed by recovering silanol-modified silica from the reaction mixture through filtration.

The hydrogenated nitrile rubber was obtained in the same manner as in Example 1, and the palladium metal amount in the obtained hydrogenated nitrile rubber was 90 ppm by weight. For the recovered silanol-modified silica, XAFS measurement was performed in the same manner as in Example 1 to determine the weight ratio of palladium in a divalent or higher-valent oxidized state. Table 1 shows the results. Further, the palladium metal amount captured and recovered by the silanol-modified silica was measured in the same manner as in Example 1, with the result that the weight per hydrogenated nitrile rubber was 12 ppm by weight. Table 1 shows the catalyst removal rate and catalyst recovery rate obtained from these results.

### [Table 1]

**Table 1**

| | Sample | | Oxidizing Agent | | | Complexing Agent | | | Capturing Agent | | | Total Reaction Time [hour] | Ratio of Divalent or Higher-Valent Pd on Capturing Agent [mol%] | Removal Rate [%] | Capture Rate [%] |
|---|---|---|---|---|---|---|---|---|---|---|---|---|---|---|---|
| | Type | Pd Content [ppm by Weight] | Type | Amount [Molar Ratio/Injection Condition] | Addition Timing | Type | Amount [Molar Ratio] | Addition Timing | Type | Amount [Ratio by Weight] | Addition Timing | | | | |
| Example 1 | Hydrogenated NBR Solution 1 | 250 | Oxygen | 7%, 1MPa | Continuous Addition from Start of Reaction | TETA | 60 | At Start of Reaction | Thiol-Modified Silica | 50 | At Start of Reaction | 24 | 68 | 72 | 62 |
| Example 2 | Hydrogenated NBR Solution 2 | 190 | Oxygen | 8%, 1MPa | Continuous Addition from Start of Reaction | TETA | 30 | At Start of Reaction | Silanol-Modified Silica | 50 | At Start of Reaction | 6 | 60 | 65 | 59 |
| Example 3 | Hydrogenated NBR Solution 2 | 190 | H₂O₂ | 15 | At Start of Reaction | TETA | 50 | At Start of Reaction | Amine-Modified Silica | 50 | At Start of Reaction | 6 | 69 | 77 | 69 |
| | | | H₂O₂ | 15 | 3 Hours after Start of Reaction | | | | | | | | | | |
| Example 4 | Hydrogenated NBR Solution 2 | 190 | H₂O₂ | 0.12/min | Continuous Addition from Start of Reaction | TETA | 40 | At Start of Reaction | Amine-Modified Silica | 50 | At Start of Reaction | 6 | 70 | 75 | 70 |
| Example 5 | Hydrogenated NBR Solution 3 | 160 | H₂O₂ | 30 | At Start of Reaction | NH₄Br | 40 | At Start of Reaction | Amine-Modified Silica | 50 | At Start of Reaction | 7 | 70 | 88 | 72 |
| Example 6 | Hydrogenated NBR Solution 1 | 250 | H₂O₂ | 15 | At Start of Reaction | NH₄Cl | 40 | At Start of Reaction | Thiol-Modified Silica | 50 | At Start of Reaction | 5 | 81 | 90 | 83 |
| Example 7 | Hydrogenated NBR Solution 2 | 190 | H₂O₂ | 10 | Initial Stage | Phenanthroline | 70 | At Start of Reaction | Thiol-Modified Silica | 50 | At Start of Reaction | 6 | 69 | 66 | 68 |
| | | | H₂O₂ | 10 | 3 Hours after Start of Reaction | | | | | | | | | | |
| Example 8 | Hydrogenated NBR Solution 2 | 190 | H₂O₂ | 0.12/min | Continuous Addition from Start of Reaction | Phenanthroline | 70 | At Start of Reaction | Silanol-Modified Silica | 50 | At Start of Reaction | 6 | 73 | 69 | 73 |
| Example 9 | Hydrogenated NBR Solution 2 | 190 | Oxygen | 7%, Atmospheric Pressure | Continuous Addition from Start of Reaction | Phenanthroline | 70 | At Start of Reaction | Thiol-Modified Silica | 50 | At Start of Reaction | 48 | 75 | 78 | 80 |
| Example 10 | Hydrogenated NBR Solution 3 | 160 | H₂O₂ | 10 | At Start of Reaction | Phenanthroline | 70 | At Start of Reaction | Thiol-Modified Silica | 50 | At Start of Reaction | 7 | 74 | 76 | 75 |
| Example 11 | Hydrogenated NBR Solution 3 | 160 | H₂O₂ | 40 | At Start of Reaction | CH₃COONH₄ | 60 | At Start of Reaction | Silanol-Modified Silica | 50 | At Start of Reaction | 5 | 70 | 67 | 71 |
| Example 12 | Hydrogenated NBR Solution 1 | 250 | H₂O₂ | 15 | At Start of Reaction | CH₃COONH₄ | 70 | At Start of Reaction | Silanol-Modified Silica | 50 | At Start of Reaction | 5 | 70 | 67 | 70 |
| Example 13 | Hydrogenated NBR Solution 4 | 250 | Oxygen | 8%, 1MPa | Continuous Addition from Start of Reaction | NH₄Cl | 30 | At Start of Reaction | Thiol-Modified Silica | 50 | At Start of Reaction | 24 | 55 | 78 | 53 |
| Example 14 | Hydrogenated NBR Solution 5 | 250 | H₂O₂ | 10 | At Start of Reaction | NH₄Cl | 40 | At Start of Reaction | Thiol-Modified Silica | 50 | At Start of Reaction | 6 | 70 | 83 | 72 |
| | | | H₂O₂ | 10 | 3 Hours after Start of Reaction | | | | | | | | | | |
| Example 15 | Hydrogenated NBR Solution 2 | 190 | H₂O₂ | 10 | At Start of Reaction | CH₃COONH₄ | 50 | At Start of Reaction | Thiourea-Modified Beads | Placed in Column | Passed Through After Reaction | 7 | 65 | 78 | 65 |
| | | | H₂O₂ | 10 | 3 Hours after Start of Reaction | | | | | | | | | | |
| Comparative Example 1 | Hydrogenated NBR Solution 1 | 250 | H₂O₂ | 20 | At Start of Reaction | TETA | 10 | At Start of Reaction | Thiol-Modified Silica | 50 | 5 Hours after Start of Reaction | 7 | 30 | 55 | 30 |
| Comparative Example 2 | Hydrogenated NBR Solution 1 | 250 | H₂O₂ | 20 | At Start of Reaction | DMG | 40 | At Start of Reaction | Thiol-Modified Silica | 50 | At Start of Reaction | 6 | 5 | 5 | 5 |
| Comparative Example 3 | Hydrogenated NBR Solution 1 | 250 | Oxygen | 7%, Atmospheric Pressure | Continuous Addition from Start of Reaction | NH₄Br | 40 | 3 Hours after Start of Reaction | Silanol-Modified Silica | 50 | 6 Hours after Start of Reaction | 8 | 7 | 31 | 6 |
| Comparative Example 4 | Hydrogenated NBR Solution 1 | 250 | H₂O₂ | 20 | At Start of Reaction | Ammonia | 30 | 3 Hours after Start of Reaction | Silanol-Modified Silica | 50 | 5 Hours after Start of Reaction | 7 | 5 | 64 | 5 |

In Table 1, the amount of the oxidizing agent indicates an amount in terms of molar ratio with respect to per amount of palladium contained in the hydrogenated nitrile rubber solution, or the condition in injecting the oxygen. The amount of the complexing agent is an amount in terms of molar ratio with respect to per amount of palladium contained in the hydrogenated nitrile rubber solution, and the amount of the capturing agent is an amount in terms of weight ratio with respect to per amount of palladium contained in the hydrogenated nitrile rubber solution.

Further, although Table 1 shows the ratio of a platinum group element adsorbed onto a capturing agent in the form of a platinum group element complex in a divalent or higher-valent oxidized state, the same value was detected for the ratio of a platinum group element adsorbed onto a capturing agent in the form of a platinum group element complex in another oxidized state, including a monovalent oxidized state.

As shown in Table 1, when a platinum group element was recovered by adsorbing it onto a capturing agent in a state in which 50 mol% or more of the platinum group element adsorbed onto the capturing agent was in the form of a platinum group element complex in an oxidized state (a platinum group element complex in a divalent or higher-valent oxidized state), the capture rate by the capturing agent was high and the platinum group element was recovered with a high recovery rate. Furthermore, the removal rate of platinum group elements from the hydrogenated nitrile rubber solution was also high (Examples 1 to 15).

On the other hand, when a platinum group element was recovered by adsorbing it onto a capturing agent in a state in which less than 50 mol% of the platinum group element adsorbed onto the capturing agent was in the form of a platinum group element complex in an oxidized state (a platinum group element complex in a divalent or higher-valent oxidized state), the capture rate by the capturing agent was low and the recovery of the platinum group element was low (Comparative Examples 1 to 4).

## Claims

1. A method for recovering a platinum group element from a solution containing a platinum group element using a capturing agent by adsorbing a platinum group element onto a capturing agent, the method comprising:
recovering a platinum group element by adsorbing a platinum group element onto a capturing agent so that a ratio of a platinum group element adsorbed in a form of a platinum group element complex in an oxidized state is 50 mol% or more among platinum group elements adsorbed onto the capturing agent.

2. The method for recovering a platinum group element according to claim 1, wherein a platinum group element is recovered by adsorbing a platinum group element onto a capturing agent so that a ratio of the platinum group element adsorbed in a form of a platinum group element complex in a divalent or higher-valent oxidized state is 50 mol% or more among platinum group elements adsorbed onto the capturing agent.

3. The method for recovering a platinum group element according to claim 1 or 2, wherein a platinum group element is recovered in the presence of a complexing agent represented by General Formula (1),
CₙHₘNₚO_{q}Xᵣ (1)
where X is an element other than C, H, N, and O, n = 1 to 13, m = 1 to 18, p = 0 to 4, q = 0 to 4, r = 0 to 4, and at least one of p and q is 1 or more.

4. The method for recovering a platinum group element according to any one of claims 1 to 3, wherein the complexing agent is an ammonium salt, an amine, or an imine.

5. The method for recovering a platinum group element according to any one of claims 1 to 4, wherein the solution containing a platinum group element is a solution containing a platinum group element and a polymer.

6. The method for recovering a platinum group element according to claim 5, wherein the solution containing a platinum group element is a solution containing a hydrogenated nitrile rubber and a platinum group element derived from a platinum group element-containing catalyst.

7. The method for recovering a platinum group element according to any one of claims 1 to 6, wherein the recovering a platinum group element contained in a solution containing a platinum group element by adsorbing a platinum group element onto a capturing agent is initiated in a state in which the solution containing a platinum group element is simultaneously in contact with a metal-free oxidizing agent, a complexing agent, and a capturing agent.

8. The method for recovering a platinum group element according to any one of claims 1 to 6, wherein the solution containing a platinum group element is brought simultaneously into contact with a metal-free oxidizing agent and a complexing agent, and a solution containing 50 mol% or more of the platinum group element being in a form of a platinum group element complex in an oxidized state is passed through a column filled with a capturing agent, thereby adsorbing a platinum group element onto the capturing agent.

9. The method for recovering a platinum group element according to claim 7 or 8, wherein the metal-free oxidizing agent is hydrogen peroxide, air, or oxygen.

10. The method for recovering a platinum group element according to any one of claims 1 to 9, wherein the capturing agent is a surface-treated silica.
